# EUROPÄISCHE PATENTANMELDUNG

(11) **EP 0 685 289 A1**
(43) Veröffentlichungstag der Anmeldung: **06.12.1995**
(21) Anmeldenummer: 95107995.3
(22) Anmeldetag: 24.05.1995
(51) Int. Cl.: B23K 11/25

(54) **Vorrichtung zur Schweissstromregelung beim Punktschweissen mit einem Fuzzy-Messgeber zur quantifizierten Erfassung der Stärke von Schweissspritzern**

(30) Priorität: 31.05.1994 DE 4419071
(71) Anmelder: SIEMENS AKTIENGESELLSCHAFT, D-80333 München (DE)
(72) Erfinder: Köbler, Stefan, Dipl.-Ing., D-90513 Zirndorf (DE)

(57) **Zusammenfassung**

Die Vorrichtung enthält ein erstes Filter (F1), welches aus Schweißstrom (I) und Schweißspannung (U) die relative Widerstandsänderung (R) des Schweißgutes ableitet, ein zweites Filter (F2), welches aus der Schweißelektroden-Beschleunigung (A) deren Beschleunigungsänderung (EB) ableitet, ein drittes Filter (F3), welches aus der Beschleunigung (A) deren Amplitude (AEB) ableitet, einen Fuzzy-Meßgeber (FM), dem die Amplitude der Elektrodenbeschleunigung (AEB) und die relative Widerstandsänderung (R) zugeführt werden, und der bei Schweißspritzern einen Spritzerstärke-Istwert (S) ableitet, und eine Regeleinrichtung (SW), der die Größen (R,EB,S) vom ersten, zweiten Filter und vom Fuzzy-Meßgeber (FM) zugeführt werden, und die hieraus ein Stellsignal (W) ableitet, so daß ein abhängig vom der Spritzerstärke reduzierter Istwert des Schweißstromes auftritt.

## Beschreibung

Beim Widerstandspreßschweißen insbesondere von Blechen z.B. in der Automobilindustrie ist das Auftreten von Schweißspritzern im allgemeinen unerwünscht. Hiermit sind eine Reihe von Nachteilen verbunden. So beeinträchtigt der eruptive, unkontrollierte Auswurf von flüssigem Metall im Moment des Auftretens eines Spritzers die Qualität des betroffenen Schweißpunktes, und verursacht eine Verschmutzung der den Schweißpunkt umgebenden Blechoberfläche. Ferner wird die Standzeit der Elektroden durch erhöhten Verschleiß reduziert.

Da das Auftreten von Schweißspritzern bislang nicht vorhersehbar ist, kann deren Auftreten nicht generell vermieden werden. Das Ziel kann somit nur darin bestehen, bei einem erkannten Schweißspritzer die Gefahr des Auftretens von weiteren Spritzern in der verbleibenden Schweißzeit zu verringern. Der Prozeß soll also so beruhigt werden, daß für den Rest der Schweißzeit keine weiteren Qualitätsbeeinträchtigungen mehr auftreten. Von einem Schweißspritzer möglicherweise im weiteren Verlauf der Schweißung hervorgerufene gestörte Reaktionen der Schweißstromregelung sollen somit im Sinne einer Dämpfung des gestörten Prozesses abgefangen werden. Hierzu wird in der Regel die dem Schweißgut zugeführte Leistung z.B. durch eine kurzfristige Vergrößerung des Thyristorstellwinkels in der elektrischen Ansteuerung der Elektroden reduziert.

Während die Erkennung des Auftretens eines Schweißspritzers mit größerer Sicherheit möglich ist, besteht aber das wesentliche Problem in einer quantitativen Bewertung desselben, d.h. ob der jeweilige Spitzer bezüglich Dauer und Stärke z.B. als schwach, mittel oder stark einzustufen ist. Eine derartige Bewertung wäre aber äußerst hilfreich für den Erfolg der angestrebten Dämpfung. Andernfalls sind Fehleingriffe auf die Schweißstromregelung durch entweder zu heftige oder zu zögerliche Rücknahme der dem Schweißgut zugeführten Leistung kaum zu vermeiden.

Der Erfindung liegt somit die Aufgabe zu Grunde, eine quantifizierte Erfassung der Stärke von Schweißspritzern möglich zu machen, um mit Hilfe eines derart gewonnenen Istwertes der Spritzerstärke optimal auf die Regelung des Schweißstromes im Sinne einer Dämpfung des durch Auftreten des Spritzer vorübergehend gestörten Prozesses einwirken zu können.

Die Aufgabe wird gelöst mit der im Anspruch 1 angegebenen Vorrichtung zur Schweißstromregelung.

Diese enthält ein erstes Filter, welches aus den Zeitverläufen des Schweißstromes und der Schweißspannung den Wert der relativen Änderung des elektrischen Widerstandes des Schweißgutes ableitet. In einem zweiten Filter wird aus dem Zeitverlauf der Beschleunigung der Schweißelektroden der Wert von deren Beschleunigungsänderung ableitet. Schließlich ist ein drittes Filter vorhanden, welches aus dem Zeitverlauf der Beschleunigung der Schweißelektroden den Wert der Amplitude der Elektrodenbeschleunigung ableitet.

Das wesentliche Element der erfindungsgemäßen Vorrichtung ist ein Fuzzy-Meßgeber, dem als erste Eingangsgröße vom dritten Filter der Wert der Amplitude der Elektrodenbeschleunigung und als zweite Eingangsgröße vom ersten Filter der Wert der relativen Widerstandsänderung des Schweißgutes zugeführt werden. Beim Auftreten von Schweißspritzern leitet der Fuzzy-Meßgeber aus diesen Eingangsgrößen als Ausgangsgröße einen Istwert für die Spritzerstärke ab.

Als Eingangsgrößen werden schließlich dieser Istwert und die vom ersten und zweiten Filter abgeleiteten Größen einer Regeleinrichtung zugeführt. Diese leitet hieraus ein Stellsignal für den Schweißstrom derart ab, daß ein abhängig vom Istwert der Spritzerstärke reduzierter Istwert des Schweißstromes auftritt.

Weitere vorteilhafte Ausführungsformen der Erfindung sind in nachfolgenden Unteransprüchen angegeben.

Die Erfindung und weitere vorteilhafte Ausführungsformen derselben werden an Hand der nachfolgend kurz angeführten Figuren näher erläutert. Dabei zeigt
- Fig.1: ein Blockschaltbild der erfindungsgemäßen Regelungsvorrichtung für den Schweißstrom,
- Fig.2: eine vorteilhafte Ausführungsform für das dritte Filter zur Bildung der Amplitude der Elektrodenbeschleunigung mit einem ersten Abtaster am Filtereingang und einem zweiten Abtaster am Filterausgang,
- Fig.3: eine vorteilhafte Ausführungsform für einen Mittelwertbildner am Ausgang des dritten Filters,
- Fig.4: beispielhaft den zeitlichen Verlauf der Elektrodenbeschleunigung bei Auftreten eines Schweißspritzers und den dazugehörigen Verlauf der Amplitude der Elektrodenbeschleunigung am Ausgang des dritten Filters,
- Fig.5: beispielhaft einen Satz von Zugehörigkeitsfunktionen für die Amplitude der Elektrodenbeschleunigung als erste Eingangsgröße des Fuzzy-Meßgebers,
- Fig.6: beispielhaft einen Satz von Zugehörigkeitsfunktionen für die relative Widerstandsänderung des Schweißgutes als zweite Eingangsgröße des Fuzzy-Meßgebers,
- Fig.7: beispielhaft einen Satz von Zugehörigkeitsfunktionen für den Istwert der Spritzerstärke als Ausgangsgröße des Fuzzy-Meßgebers,
- Fig.8a bis 8f: beispielhaft einen ersten Satz von Verknüpfungsmatrizen für die Eingangsgrößen des Fuzzy-Meßgebers mit exemplarischen Plausibilitätswerten, welcher die in den Figuren 5 und 6 beispielhaft dargestellten Eingangsgrößen und die in Figur 7 beispielhaft dargestellten Ausgangsgrößen in Form einer Regelbasis zueinander in Beziehung setzt,
- Fig.9a bis 9f: beispielhaft einen vom ersten Satz abgeleiteten zweiten Satz von Verknüpfungsmatrizen für die Eingangsgrößen des Fuzzy-Meßgebers mit exemplarischen Plausibilitätsbereichen, und
- Fig.10: ein beispielhaftes Kennlinienfeld für den Istwert der Spritzerstärke am Ausgang des Fuzzy-Meßgebers in Abhängigkeit von dessen Eingangsgrößen.

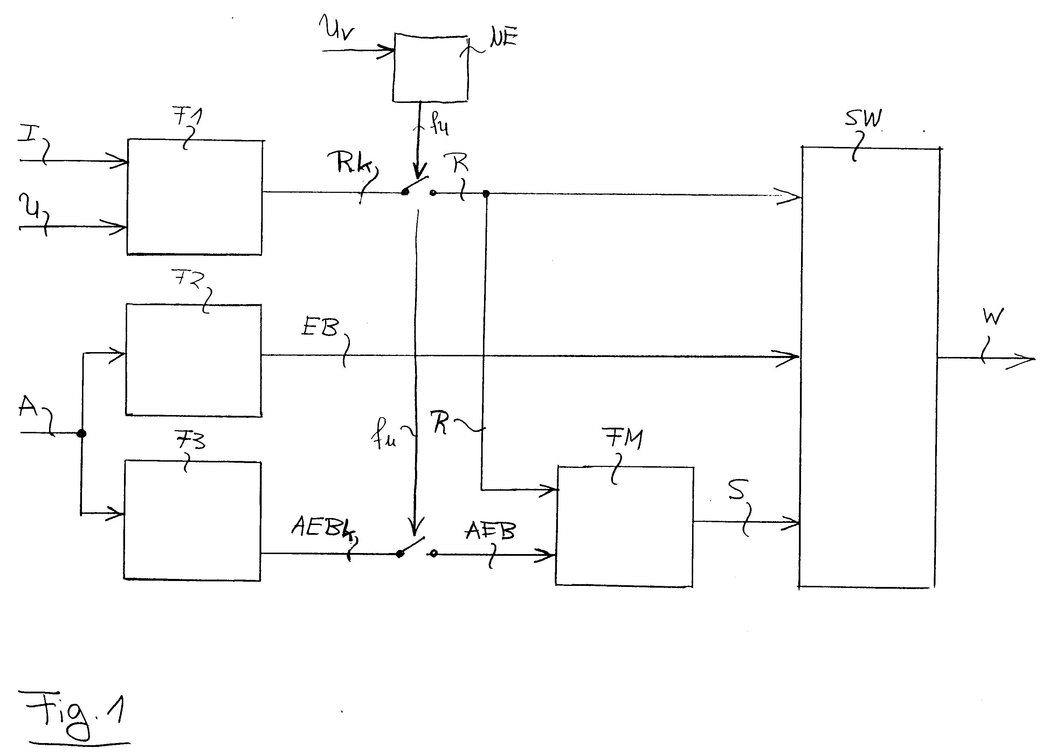

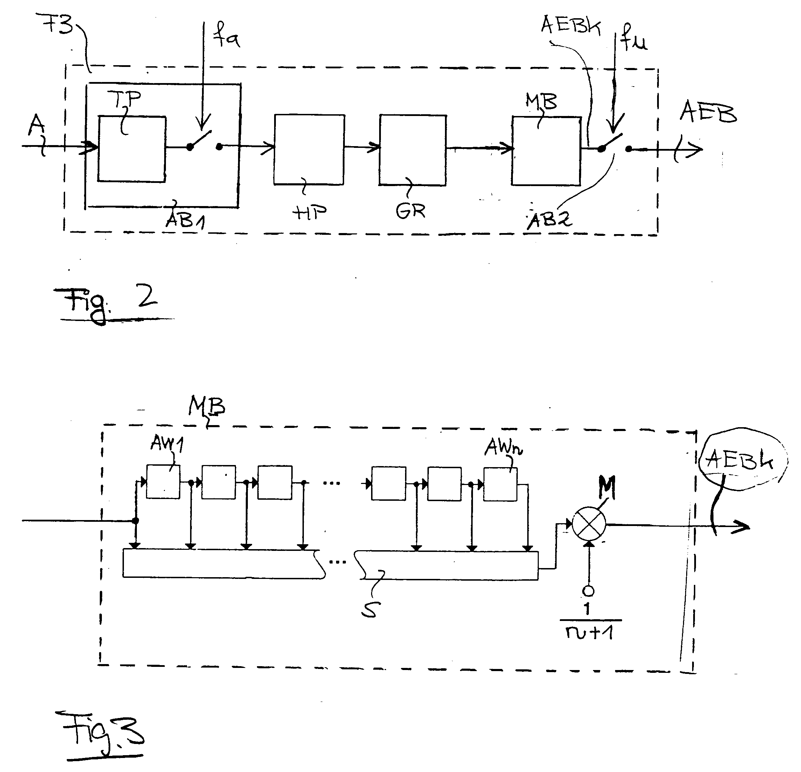

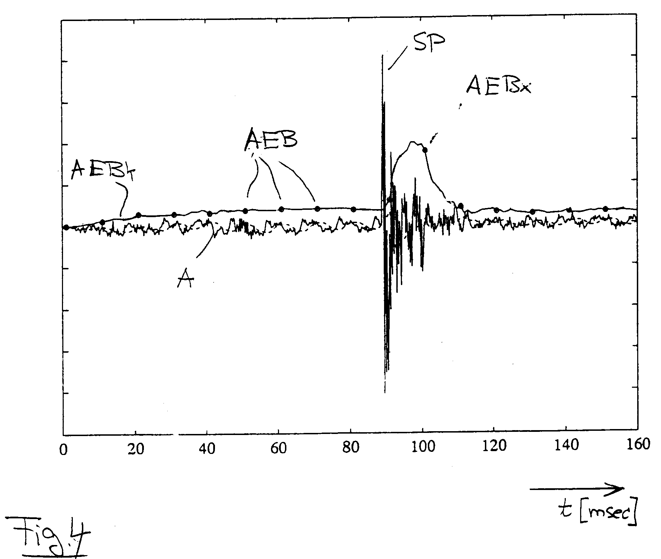

In Figur 1 ist die erfindungsgemäße Vorrichtung zur Schweißstromregelung beim Punktschweißen beispielhaft in Form eines Blockschaltbildes dargestellt. Die Vorrichtung enthält ein erstes Filter F1, welches aus den meßtechnisch erfaßten Zeitverläufen des Schweißstromes I und der Schweißspannung U den Wert der relativen Anderung des elektrischen Widerstandes R des Schweißgutes ableitet. Dieser Wert bildet eine erste Führungsgröße für die Schweißstromregelung SW. In einem zweiten Filter F2 wird aus dem meßtechnisch erfaßten Zeitverlauf der mechanischen Beschleunigung A der Schweißelektroden der Wert von deren Beschleunigungsänderung EB ableitet und als eine weitere Führungsgröße der Schweißstromregelung SW zugeführt.

Schließlich ist ein drittes Filter F3 vorhanden, welches aus dem Zeitverlauf der Beschleunigung A der Schweißelektroden den Wert der Amplitude der Elektrodenbeschleunigung AEB ableitet. Die erfindungsgemäße Vorrichtung weist als ein weiteres wesentliches Element einen Fuzzy-Meßgeber FM, dem als erste Eingangsgröße der Wert der Amplitude der Elektrodenbeschleunigung AEB vom dritten Filter F3 und als zweite Eingangsgröße der Wert der relativen Widerstandsänderung des Schweißgutes R vom ersten Filter F1 zugeführt werden, und der hieraus beim Auftreten von Schweißspritzern als Ausgangsgröße einen Istwert für die Spritzerstärke S ableitet. Vorteilhaft wird diese Größe in Form eines auf einen Bereich von 0% bis 100% normierten relativen Spritzeristwertes gebildet.

Es wird als besonders vorteilhaft angesehen, daß der Regeleinrichtung SW neben den vom ersten und zweiten Filter F1,F2 bereitgestellten Führungsgrößen R und EB der vom Fuzzy-Meßgeber FM abgeleitete Istwert für die Spritzerstärke S als weitere Führungsgroße zugeführt werden kann. Die Regeleinrichtung SW kann hieraus mit einer bislang nicht erreichten Genauigkeit ein Stellsignal W insbesondere zur Vorgabe von Thyristorphasenanschnittswinkeln für die auf einen Schweißspritzer folgende Stromhalbwelle derart ableiten, daß ein abhängig vom Istwert S der Spritzerstärke reduzierter Istwert des Schweißstromes I auftritt. Hierdurch wird ein schneller, die in das Schweißgut eingebrachte Leistung spritzerstärkeabhängig reduzierender Eingriff bewirkt. Als Ergebnis kann der durch das Auftreten eines Schweißspritzers aus dem Gleichgewicht gebrachte Schweißstromregelkreis SW hierdurch so gedämpft werden, daß in aller Regel das Auftreten weiterer Schweißspritzer vermieden wird. Die zu erreichende Form und Größe der Schweißlinsen wird somit durch die Erfindung vorteilhaft beeinflußt, da zumindest Ketten von aufeinanderfolgenden Schweißspritzern während eines einzigen Schweißvorganges verhindert werden.

Eine bevorzugte Ausführungsform des dritten Filters enthält ein Hochpaßfilter, welches von Elektrodendriftungen hervorgerufene niederfrequente Störungen im Zeitverlauf der Elektrodenbeschleunigung ausfiltert. Diesem ist ein Gleichrichter nachgeschaltet, der aus dem Ausgangssignal des Hochpaßfilters ein Amplitudensignal ableitet. Das Ausgangssignal wird gebildet von einem Mittelwertbildner, welcher zur Bildung der Elektrodenbeschleunigung das Amplitudensignal des Gleichrichters zumindest über eine Stromhalbwelle glättet. Eine derartige Ausführung ist beispielhaft in der Figur 2 dargestellt. Dabei bildet ein Hochpaßfilter HP den Eingang des dritten Filters F3. Es schließt sich ein Gleichrichter GR und ein Mittelwertbildner MB an.

In dieser bevorzugten Ausführungsform eines dritten Filters der erfindungsgemäßen Vorrichtung hat der Hochpaß HP die Aufgabe der Signalvorverarbeitung. Hierdurch werden von Elektrodendriftungen hervorgerufene Gleichspannungsanteile und andere niederfrequente Störungen in dem meßtechnisch erfaßten Zeitverlauf der Elektrodenbeschleunigung A eliminiert. Das auf diese Weise vorverarbeitete Meßsignal der Elektrodenbeschleunigung A enthält somit nur noch Anteile, die von dem Materialauswurf bei Auftreten eines Schweißspritzers verursacht werden und nicht etwa von allgemeinen Elektrodendriftungen.

Der sich anschließende Gleichrichter GR richtet das derart aufbereitet Meßsignal der Elektrodenbeschleunigung A gleich. Dies ist in der Art einer vorbereitenden Handlung notwendig, damit letztendlich der gewünschte Istwert für die Spritzerstärke in Form einer Gleichgröße mit quasikontinuierlichen Amplitude gebildet werden kann. Zur Erreichnung dieses Zieles wird das Ausgangssignal des Gleichrichters GR einem Mittelwertbildner MB zugeführt. Zur Beeinflussung der Glättungswirkung ist es vorteilhaft, wenn das Ausgangssignal des Gleichrichters nur über eine Stromhalbwelle des Schweißstromes geglättet wird. Der Mittelwertbildner MB hat eine mit einem Tiefpaßfilter vergleichbare Wirkung, und bewirkt, daß in der Vergangenheit aufgetretene Verläufe der Amplitude der Elektrodenbeschleunigung im aufbereiteten Meßwert A mit Berücksichtigung finden. Dies ist vorteilhaft, da auf die Zuführung von Leistung in einen Schweißpunkt nur mit jedem neuen Thyristoranstellwinkel Einfluß genommen werden kann.

Bei einer anderen, nicht dargestellten Ausführungsform der Erfindung kann im dritten Filter F3 an Stelle der Reihenschaltung aus Gleichrichter GR und Mittelwertbildner MB auch ein sogenanntes Effektivwertfilter eingesetzt werden.

Bei einer weiteren, besonders vorteilhaften Ausführung der erfindungsgemäßen Vorrichtung enthält das dritte Filter F3 am Eingang zusätzlich einen ersten Abtaster AB1, welcher den Zeitverlauf der Elektrodenbeschleunigung A höherfrequent abtastet, z.B. mit einer Frequenz fa, und die Abtastwerte anschließend dem Hochpaßfilter HP zuführt, und am Ausgang einen zweiten Abtaster AB2, welcher das Ausgangssignal des Mittelwertbildners MB niederfrequent unterabtastet, z.B. mit einer Frequenz fu, und die Abtastwerte dem Fuzzy-Meßgeber FM zur Bildung des Istwertes S der Spritzerstärke zuführt. Eine derartige Ausführung ist in der Fig.2 bereits dargestellt.

Eine derartige Ergänzung ist besonders dann vorteilhaft, wenn die Regeleinrichtung SW zur Bildung des Stellsignales W für den Schweißstrom in Form eines digitalen Abtastregelsystemes in diskreter Technik ausgeführt ist. In einem solchen Fall werden alle meßtechnisch erfaßten Eingangsgrößen, d.h. die Istwerte des Schweißstromes I, der Schweißspannung U und der Elektrodenbeschleunigung A in den entsprechenden Filtern F1 und F3 mit einer ersten Abtastfrequenz fa höherfrequent abgetastet. Es entstehen dabei die Figur 1 mit k zusätzlich gekennzeichneten Werte Rk und AEBk, welche als quasikontinuierliche Zeitsignale angesehen werden können. In Figur 2 ist diese Abtastung mittels eines ersten Abtasters AB1 am Beispiel der Eingangsgröße Elektrodenbeschleunigung A im Detail dargestellt. Vorteilhaft werden die analogen Meßwerte vor der Abtastung einem vorgeschalteten Tiefpaßfilter TP zum Zwecke der Frequenzbegrenzung zugeführt, welches auch als ein Anti-Aliasing-Filter bezeichnet werden kann.

An diese höherfrequente Hauptabtastung schließt sich im Anschluß an die Filter F1 und F3 eine Unterabtastung mit der reduzierten Frequenz fu an. Diese Unterabtastung hat die Aufgabe, aus der Vielzahl der Abtastwerte in Rk und AEBk insbesondere zum Zwecke der Reduktion der weiter zu verarbeitenden Datenmengen in größeren Zeitabständen repräsentative Werte herauszugreifen. In Figur 1 ist diese Unterabtastung mit fu durch Schalter, welche zwischen den Größen Rk und R bzw. AEBk und AEB angeordnet sind, bereits symbolisch dargestellt. Ferner ist Figur 2 diese Unterabtastung mittels eines zweiten Abtasters AB2 wiederum am Beispiel der Eingangsgröße Elektrodenbeschleunigung A im Detail dargestellt.

Gemäß einer weiteren Ausführung der Erfindung ist es vorteilhaft, wenn hierzu zusätzlich eine Vorrichtung NE zur Erkennung der Nulldurchgänge bei einer die Vorrichtung zur Punktschweißung versorgenden Primärspannung Uv vorhanden ist, die hieraus die Frequenz fu zur Steuerung der Abtaster für die niederfrequente Unterabtastung des Ausgangssignales Rk des ersten Filters F1 und des Ausgangssignales AEBk des dritten Filters F3 ableitet. Eine derartige Vorrichtung ist bereits in der Figur 1 dargestellt. Die Unterabtastung erfolgt somit synchron mit den Nulldurchgängen dieser versorgenden Primärspannung Uv. Hierdurch wird pro Stromhalbwelle ein charakteristischer Wert von R und AEB aus dem Strom der gegebenenfalls im dritten Filter F3 aufbereiteten Abtastwerte für die relative Änderung des Widerstandes des Schweißgutes R und die Amplitude der Beschleunigung der Elektroden ausgeblendet.

Es ist ausreichend, wenn diese durch Unterabtastung mit reduzierter Frequenz fu gewonnenen Werte in den weiteren Elementen der erfindungsgemäßen Vorrichtung, d.h. dem Fuzzy-Meßgeber FM und der Schweißstromregelung SW weiterverarbeitet werden. Diese Werte beinhalten alle notwendigen Informationen, um zum einen aus den spritzerverursachten Elektrodenbeschleunigungsanteilen der vorangegangenen Stromhalbwelle den gewünschten Spritzeristwert S ableiten zu können, und um zum anderen in der Schweißstromregelung SW ausreichend schnell und trotzdem genau im Sinne eine Folgespritzerunterdrückung auf den Phasenanschnittswinkel der neuen Stromhalbwelle eingreifen zu können.

In Fig.3 ist beispielhaft eine vorteilhafte Ausführungsform für einen Mittelwertbildner MB am Ausgang des dritten Filters F3 dargestellt. Im Mittelwertbildner wird pro Abtastpunkt ein Abtastwert vom Ausgang des Gleichrichters GR einer Kette von Abtastwertspeichern AW1 ... AWn zugeführt, wobei die Anzahl n der Speicher der Ordnung des Filters entspricht. Pro Abtastzeitpunkt werden der Inhalt eines jeden Abtastwertspeichers an den benachbarten, nächst höheren Abtastwertspeicher weitergegeben und der aktuelle Abtastwert in den freigewordenen ersten Abtastwertspeicher AW1 aufgenommen. Ein Summierer faßt die Inhalte aller Abtastwertspeicher zusammen. Der so entstandene Wert wird nach Normierung mit einem Faktor 1 / n+1 über einen Multiplizierer M als Ausgangswert AEBk ausgegeben. Dieser stellt einen quasikontinuierlichen Mittelwert der Eingangsgröße dar. Vorteilhaft entspricht die Ordnung dieses Mittelwertfilters MB der Anzahl der durch die Abtastung mit fa gewonnenen Abtastwerte in der vorangegangenen Stromhalbwelle.

In der Figur 4 ist beispielhaft der zeitliche Verlauf A der mechanischen Elektrodenbeschleunigung dargestellt, wobei das Auftreten eines Schweißspritzers SP durch eine annähernd im Zentrum liegende Überschwingung deutlich zu erkennen ist. Ferner ist in Form einer durchgehenden, über dem zeitlichen Verlauf A liegenden Kurve der dazugehörige Verlauf AEBk der Amplitude der Elektrodenbeschleunigung dargestellt, wie er sich nach Aufbereitung in einer Reihenschaltung aus einem Hochpaßfilter HP, einem Gleichrichter GR und einem Mittelwertbildner MB gemäß dem in Figur 2 dargestellten Beispiel ergibt. Man erkennt, daß bedingt durch den Schweißspritzer SP der Verlauf von AEBk ein deutliches Maximum durchläuft, d.h. der Schweißspritzer also eindeutig im Verlauf von AEBk abgebildet wird. Bei dem Verlauf von AEBk kann es sich um eine kontinuierliche Kurve handeln, bzw. bei Vorhandensein einer ersten Abtastung mit fa im ersten Abtaster AB1 um einen quasikontinuierlichen, aus einem Strom vieler Abtastwerte bestehenden Verlauf. Schließlich sind die für den Fall des Vorhandenseins eines zweiten Abtasters AB2 mit fu am Ausgang des dritten Filters F3 auftretenden, unterabgetasteten Werte AEB dargestellt. Man erkennt, daß es sich hierbei um aus dem Verlauf von AEBk herausgegriffenen repräsentativen Einzelwerten handelt. Ferner ist der Figur 2 zu entnehmen, daß zumindest ein Wert von AEBk, in Figur 2 mit AEBx bezeichnet, aus dem zum Schweißspritzer SP gehörigen Maximum entnommen wird. Der Schweißspritzer wird also eindeutig auch im Verlauf der Unterabtastwerte AEB abgebildet. Wird der Wert der Unterabtastfrequenz fu variiert, so können auch mehrere Einzelwerte von AEB dem Maximum von AEBk entnommen sein.

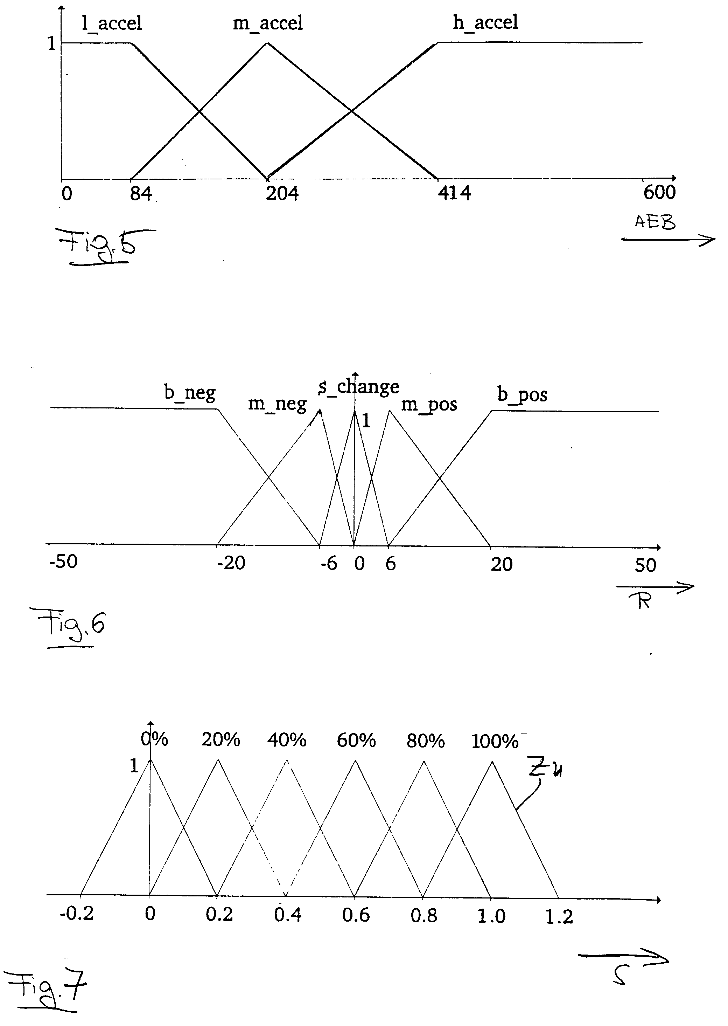

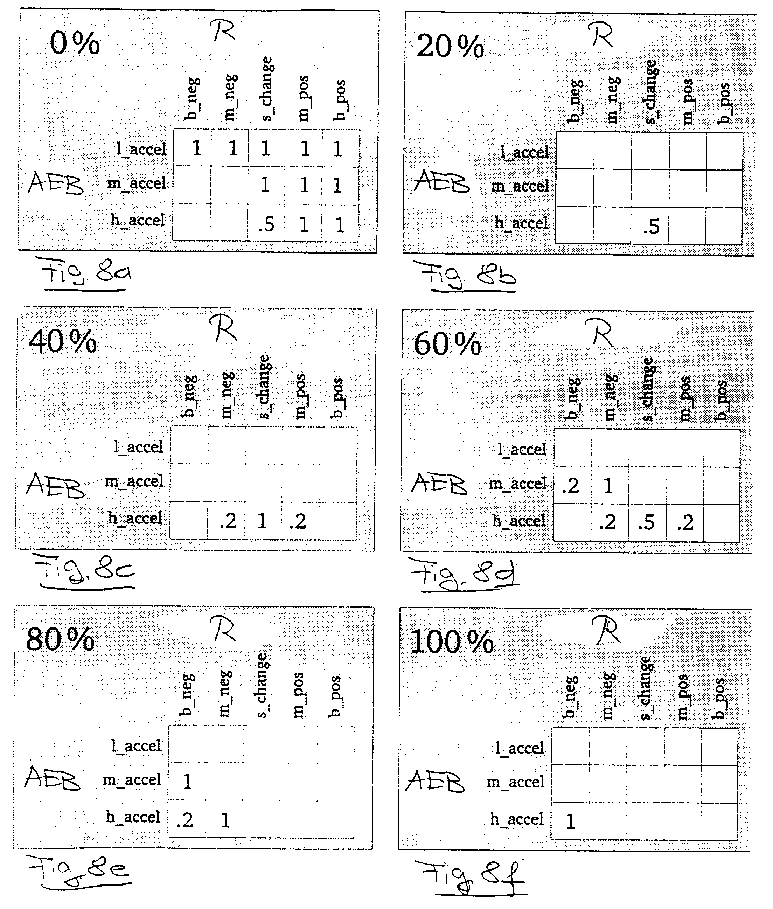

In den Figuren 5 und 6 sind die für eine sogenannte Fuzzifizierung der Eingangsgrößen des Fuzzy-Meßgebers FM notwendigen Zugehörigkeitsfunktionen beispielhaft dargestellt. Dabei handelt es sich gemäß Figur 5 um Zugehörigkeitsfunktionen die am Ausgang des dritten Filters F3 unterabgetastete Amplitude der Elektrodenbeschleunigung AEB, und gemäß Figur 6 um Zugehörigkeitsfunktionen für den am Ausgang des ersten Filters F1 unterabetasteten Wert der relativen Schweißgut-Widerstandsänderung R. Bei einer vorteilhaften Ausführung für den Fuzzy-Meßgeber FM werden gemäß Figur 5 bei der ersten Eingangsgröße der Amplitude der Elektrodenbeschleunigung AEB zumindest Zugehörigkeitsfunktionen l_accel, m_accel und h_accel für niedrige, mittlere und hohe Werte berücksichtigt.

Bei einer weiteren vorteilhaften Ausführung für den Fuzzy-Meßgeber FM werden gemäß Figur 6 bei der zweiten Eingangsgröße der relativen Widerstandsänderung R zumindest Zugehörigkeitsfunktionen b_pos, mpos, s_change, m_neg, und b_neg für große positive, mittlere positive, kleine, mittlere negative und große negative Werte berücksichtigt. Es ist weiterhin vorteilhaft, wenn die Flanken der Zugehörigkeitsfunktionen s_change für kleine Werte der relativen Widerstandsänderung R und die in deren Bereich liegenden Flanken der Zugehörigkeitsfunktionen m_pos bzw. m_neg für mittlere positive bzw. mittlere negative Werte größere Steigungen aufweisen, als die übrigen Flanken der restlichen Zugehörigkeitsfunktionen b_neg, m_neg, m_pos, b_pos für die zweite Eingangsgröße R. Dieser Fall ist im Beispiel der Figur 6 bereits dargestellt.

Die dabei auf den jeweiligen Rechtswertachsen der Figuren 5 und 6 angegebenen absoluten Werte für die jeweiligen Größen sind dabei beispielhaft. Deren konkrete Werte sind in jedem Einzelfall anlagenspezifisch und produktionsabhängig, insbesondere abhängig von der jeweils zu schweißenden Blechstärke. Diese müssen als Kennwerte vom Anlagenbediener zumindest einmal festgelegt oder meßtechnisch erfaßt werden. So wird im Beispiel der Fig. 5 ein Wert von 84 für die Amplitude der Elektrodenbeschleunigung AEB als gering angesehen, und charakterisiert somit den Knickpunkt für die abfallende Flanke in der Zugehörigkeitsfunktion l_accel. Ferner wird ein Wert von 204 für die Amplitude der Elektrodenbeschleunigung AEB beispielhaft als mittel groß angesehen, und charakterisiert somit das Maximum für die Zugehörigkeitsfunktion m_accel. Schließlich wird im Beispiel der Fig. 5 ein Wert von 414 für die Amplitude der Elektrodenbeschleunigung AEB als hoch angesehen, und charakterisiert somit den Knickpunkt am Ende der steigenden Flanke in der Zugehörigkeitsfunktion h_accel.

In der gleichen Weise werden im Beispiel der Figur 6 die Werte von 20 bzw. -20 für die relative Änderung des Widerstandes R des Schweißgutes als groß bzw. klein angesehen. Dementsprechend sind somit die Knickpunkte für die steigenden bzw. fallenden Flanken der Zugehörigkeitsfunktionen b_pos bzw. b_neg diesen Werten zugeordnet. Ferner werden die Werte 6 bzw. -6 als klein angesehen. Sie dienen im Beispiel der Figur 6 somit zum einen als Anfangs- und Endpunkt der Zugehörigkeitsfunktion s_change, und zum anderen wiederum als Markierung für Anfangs- und Endpunkt der steigenden bzw. fallenden Flanken der Zugehorigkeitsfunktionen m_pos bzw. m_neg.

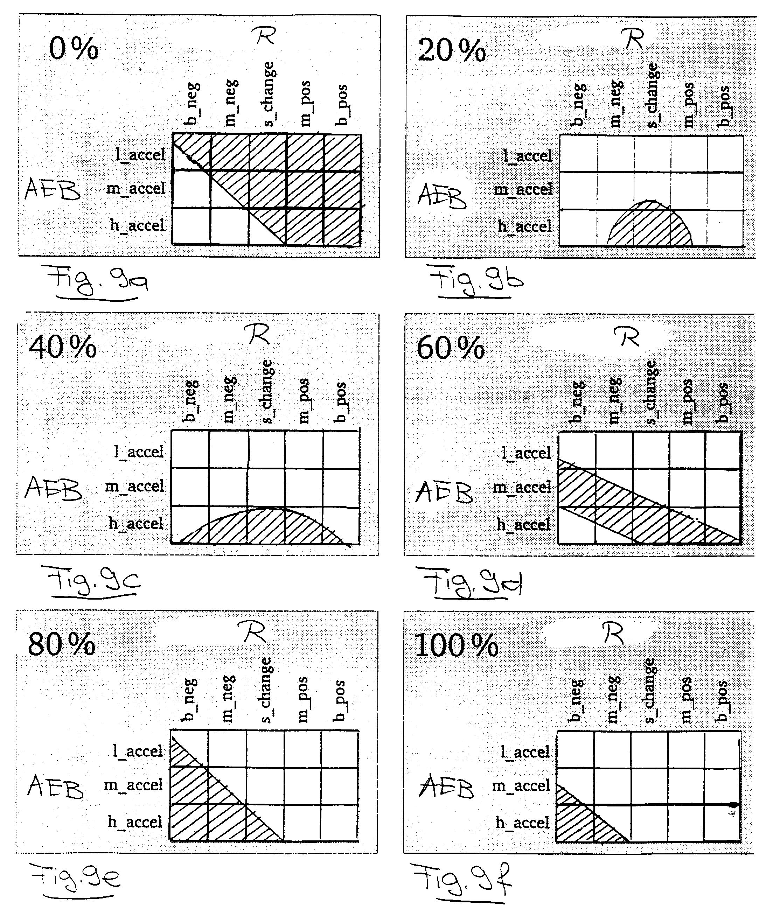

In Figur 7 sind schließlich zum Beispiel der Figuren 5 und 6 gehörige und für eine sogenannte De-Fuzzifizierung der Ausgangsgröße des Fuzzy-Meßgebers FM, d.h. der Bildung des gewünschten Istwertes der Spritzerstärke S, geeignete Zugehörigkeitsfunktionen 0%, 20%, ... 100% beispielhaft dargestellt. Dabei entsprechen auf der Rechtswertachse die Werte 0 bis 1.0 dem Auftreten eines Schweißspritzers mit einer relativen Stärke von 0% bis 100%. Der gewünschte Istwert S der Spritzerstärke wird in diesem Beispiel somit vorteilhaft in Prozent angegeben.

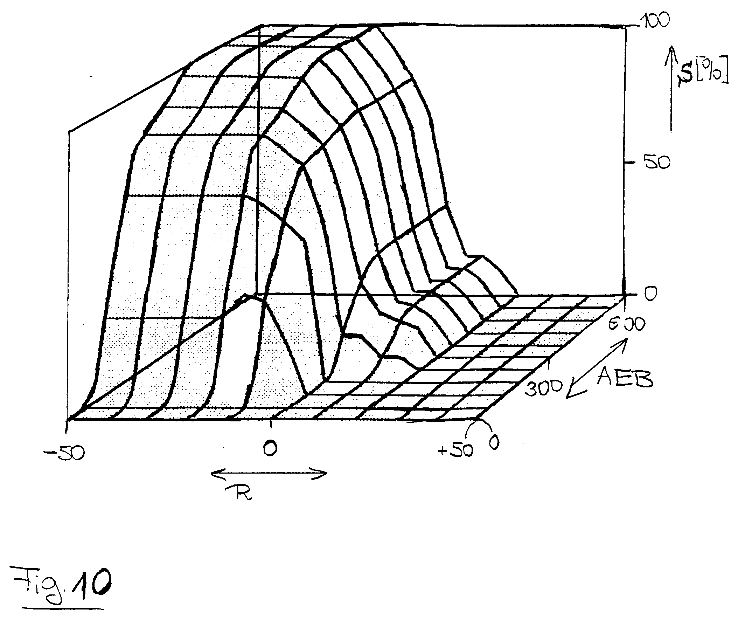

An Hand der Darstellungen in den Fig.8a bis 8f und Fig.9a bis 9f werden beispielhaft zwei mögliche, sogenannte Regelbasen dargestellt. Dabei zeigt Fig. 8a bis 8f beispielhaft einen ersten Satz von Verknüpfungsmatrizen für die Eingangsgrößen des Fuzzy-Meßgebers mit exemplarischen Plausibilitätswerten, welcher die in den Figuren 5 und 6 beispielhaft dargestellten Eingangsgrößen und die in Figur 7 beispielhaft dargestellten Ausgangsgrößen in Form einer Regelbasis zueinander in Beziehung setzt. Unter Zugrundelegung der gleichen Voraussetzungen ist in den Fig.9a bis 9f beispielhaft ein zweiter Satz von Verknüpfungsmatrizen für die Eingangsgrößen des Fuzzy-Meßgebers mit exemplarischen Plausibilitätsbereichen dargestellt, welcher wiederum die in den Figuren 5 und 6 beispielhaft dargestellten Eingangsgrößen und die in Figur 7 beispielhaft dargestellten Ausgangsgrößen in Form einer Regelbasis zueinander in Beziehung setzt.

Dabei zeigt jede der Figuren 8a bis 8f bzw. 9a bis 9f jeweils sechs Verknüpfungsmatrizen, von denen jeweils eine einem Wert 0%, 20%, 40%, 60%, 80% bzw. 100% der Spritzerstärke S zugeordnet ist. Es sind somit paarweise vergleichbar jeweils die in den Figuren 8a,9a und 8b,9b und 8c,9c und 8d,9d und 8e,9e und 8f,9f dargestellten Verknüpfungsmatrizen. Bei den in den Figuren 8a bis 8f dargestellten Verknüpfungsmatrizen sind die Felder zum Teil mit Plausibilitätswerten gefüllt. So bedeuten z.B. die Werte 1 in den Feldern der 1. Zeile der Verknüpfungsmatrix zu 0% Spritzerstärke in Figur 8a, daß beim Zusammentreffen einer Elektrodenbeschleunigungsamplitude AEB mit niedrigem Wert l_accel und einer relativen Widerstandsänderung R beliebigen Wertes, d.h. b_neg, mneg, s_change, m_pos oder b_pos, mit großer Aussagesicherheit kein Spritzer vorliegt, d.h. S = 0% ist.

Ferner bedeutet z.B. der Wert 0.5 in der 3. Zeile der Verknüpfungsmatrix zu 20% Spritzerstärke in Figur 8b, daß beim Zusammentreffen einer Elektrodenbeschleunigungsamplitude AEB mit hohem Wert h_accel und einer relativen Widerstandsänderung R mit kleinem Wert, d.h. s_change, mit mittlerer Aussagesicherheit (0.5) ein Spritzer der Größe 20% vorliegt. Schließlich bedeuten z.B. die Werte 0.2, 1 und 0.2 in der letzten Zeile der Verknüpfungsmatrix zu 40% Spritzerstärke in Figur 8c, daß beim Zusammentreffen einer Elektrodenbeschleunigungsamplitude AEB mit hohem Wert h_accel und einer relativen Widerstandsänderung R mit mittlerem negativen Wert m_neg bzw. kleinem Wert s_change bzw. mittlerem positiven Wert m_pos ein Spritzer der Stärke 40% mit einer geringen (0.2) bzw. großer (1.0) bzw. geringen (0.2) Aussagesicherheit vorhanden ist. Schließlich bedeutet z.B. der einzige Wert 1 in der linken unteren Ecke der letzten Zeile der Verknüpfungsmatrix zu 100% Spritzerstärke in Figur 8f, daß ein Spritzer mit der vollen Stärke 100% nur beim Zusammentreffen einer Elektrodenbeschleunigungsamplitude AEB mit hohem Wert h_accel und einer relativen Widerstandsänderung R mit großem negativen Wert b_neg mit großer Aussagesicherheit (1.0) vorhanden ist, während beim Zusammentreffen von anderen Kombinationen der beiden Eingangsgrößen mit großer Aussagesicherheit kein Spritzer der Stärke 100% vorhanden ist.

In sehr ähnlicher Weise sind die in den sechs Verknüpfungsmatrizen der Figuren 9a bis 9f dargestellten Plausibilitätsbereich zu interpretieren.

So sind in der Regelbasis der Fig. 9a bzw. 8a des Fuzzy-Meßgebers FM bei den Zugehörigkeitsfunktionen für sehr niedrige Werte von 0% der Ausgangsgröße S keine Beziehungen zwischen den Zugehörigkeitsfunktionen für mittlere m_accel bzw. große Werte h_accel der ersten Eingangsgröße AEB und den Zugehörigkeitsfunktionen für kleine negative b_neg bzw. mittlere negative Werte m_neg der zweiten Eingangsgröße R vorgesehen. Es ergibt sich somit in Fig. 9a bzw. 8a jeweils ein Plausibilitätsbereich, der bis auf das linke untere Eck jeweils die gesamte Verknüpfungsmatrix überdeckt.

Ferner ist es vorteilhaft, wenn bei den Zugehörigkeitsfunktionen für niedrige Werte von 20% und mittlere Werte von 40% der Ausgangsgröße S gemäß den Darstellungen in Fig. 9b und 9c bzw. 8b und 8c nur Beziehungen zwischen den Zugehörigkeitsfunktionen für hohe Werte h_accel der ersten Eingangsgröße AEB und den Zugehörigkeitsfunktionen für kleine bzw. mittlere positive und negative Werte, d.h. mneg, s_change, m_pos, der zweiten Eingangsgröße R vorgesehen sind. Es ergeben sich in Fig. 9b und 9c bzw. 8b und 8c somit linsenförmig im unteren Bereich der jeweiligen Verknüpfungsmatrix liegende Plausibilitätsbereiche.

Ferner sind vorteilhaft bei den Zugehörigkeitsfunktionen für größere Werte von 60% der Ausgangsgröße S gemäß den Darstellungen in Fig. 9d und 8d keine Beziehungen zwischen den Zugehörigkeitsfunktionen für kleine l_accel bzw. mittlere Werte m_accel der ersten Eingangsgröße AEB und den Zugehörigkeitsfunktionen für alle Werte der zweiten Eingangsgröße R vorgesehen, und zusätzlich keine Beziehungen zwischen den Zugehörigkeitsfunktionen für große h_accel der ersten Eingangsgröße AEB und der Zugehörigkeitsfunktion für große negative Werte der zweiten Eingangsgröße R vorgesehen, d.h. b_neg. Es ergibt sich somit in Fig. 9d und 8d jeweils ein streifenförmig von links oben nach rechts unten verlaufender Plausibilitätsbereich.

Schließlich sind vorteilhaft bei den Zugehörigkeitsfunktionen für hohe Werte von 80% und sehr hohe Werte von 100% der Ausgangsgröße S nur Beziehungen zwischen den Zugehörigkeitsfunktionen für hohe h_accel bzw. mittlere Werte m_accel der ersten Eingangsgröße AEB und den Zugehörigkeitsfunktionen für große negative b_neg bzw. mittlere negative Werte m_neg der zweiten Eingangsgröße (R vorgesehen. Es ergeben sich somit die in Fig. 9e, 9f und 8e, 8f im linken Eck der jeweiligen Verknüpfungsmatrix liegenden Plausibilitätsbereiche.

Weitere Details über den allgemeinen, nicht speziell die vorliegende Vorrichtung zur Schweißstromregelung beim Punktschweißen betreffenden Aufbau des Fuzzy-Meßgebers FM können dem Wissen den einschlägigen Fachmannes zugerechnet werden, so daß deren Darstellung aus Gründen der Übersichtlichkeit nicht notwendig ist.

Durch die Vergabe der Verküpfungswerte in die Zellen der einzelnen Matrizen wird, wie in der Fuzzy-Regelung allgemein üblich, die Kenntnis des Anlagenbedieners zum Gegenstand der Regelbasis gemacht. Der wesentliche Vorteil der vorliegenden Erfindung wird darin gesehen, daß auf Grund der Bildung eines Istwertes der Spritzerstärke mittels des Fuzzy-Meßgebers und der dadurch möglichen Spritzerklassifikation" eine angemessenere Reaktion der Schweißstromregelung SW auf Schweißspritzer derart möglich ist, daß in der Regel Folgespritzer vermieden werden.

In Fig. 10 ist schließlich die Zusammenfassung aller Eingangs- und Ausgangsgrößen des erfindungsgemäßen Fuzzy-Meßgebers in Form eines dreidimensionalen Kennlinienfeldes beispielhaft dargestellt. Als die eine Eingangsgröße dient die am Ausgang des dritten Filters F3 unterabgetastete Amplitude der Elektrodenbeschleunigung AEB, wobei absolute der Wertebereich dem in der Fig. 5 beispielhaft angegebenen Wertebereich entspricht. Als die zweite Eingangsgröße dient der Wert der am Ausgang des ersten Filters F1 unterabgetasteten relativen Schweißgut-Widerstandsänderung, wobei der absolute Wertebereich dem in der Fig. 6 beispielhaft angegebenen Wertebereich entspricht. Als Ausgangsgröße des Kennlinienfeldes tritt schließlich der gewünschte Istwert der Spritzerstärke bevorzugt in einer auf 100% normierten Darstellung auf. Dabei bedeuten z.B. 0% kein Schweißspritzer, 50% ein Schweißspritzer mittlerer Stärke und 100% ein Schweißspritzer maximaler Stärke.

## Patentansprüche

1. Vorrichtung zur Schweißstromregelung beim Punktschweißen, mit
a) einem ersten Filter (F1), welches aus den Zeitverläufen des Schweißstromes (I) und der Schweißspannung (U) den Wert der relativen Änderung des elektrischen Widerstandes (R) des Schweißgutes ableitet,
b) einem zweiten Filter (F2), welches aus dem Zeitverlauf der Beschleunigung (A) der Schweißelektroden den Wert von deren Beschleunigungsänderung (EB) ableitet,
c) einem dritten Filter (F3), welches aus dem Zeitverlauf der Beschleunigung (A) der Schweißelektroden den Wert der Amplitude der Elektrodenbeschleunigung (AEB) ableitet,
d) einem Fuzzy-Meßgeber (FM), dem als erste Eingangsgröße der Wert der Amplitude der Elektrodenbeschleunigung (AEB) und als zweite Eingangsgröße der Wert der relativen Widerstandsänderung des Schweißgutes (R) zugeführt werden, und der beim Auftreten von Schweißspritzern als Ausgangsgröße einen Istwert für die Spritzerstärke (S) ableitet, und mit
e) einer Regeleinrichtung (SW), welcher die vom ersten und zweiten Filter (F1,F2) und vom Fuzzy-Meßgeber (FM) abgeleiteten Größen (R,EB,S) als Eingangsgrößen zugeführt werden, und welche hieraus ein Stellsignal (W) für den Schweißstrom (I) derart ableitet, daß ein abhängig vom Istwert (S) der Spritzerstärke reduzierter Istwert des Schweißstromes (I) auftritt (Fig.1).

2. Vorrichtung nach Anspruch 1, wobei das dritte Filter (F3) enthält
a) ein Hochpaßfilter (HP), welches von Elektrodendriftungen hervorgerufene niederfrequente Störungen im Zeitverlauf der Elektrodenbeschleunigung (A) ausfiltert,
b) einen Gleichrichter (GR), der aus dem Ausgangssignal des Hochpaßfilters (HP) ein Amplitudensignal ableitet, und
c) einen Mittelwertbildner (MB), welcher zur Bildung der Elektrodenbeschleunigung (AEB) das Amplitudensignal des Gleichrichters (GR) zumindest über eine Stromhalbwelle glättet (Fig.2).

3. Vorrichtung nach Anspruch 2, wobei das dritte Filter (F3) enthält
a) einen ersten Abtaster (AB1), welcher den Zeitverlauf der Elektrodenbeschleunigung (A) höherfrequent (fa) abtastet und die Abtastwerte dem Hochpaßfilter (HP) zuführt, und
b) einen zweiten Abtaster (AB2), welcher das Ausgangssignal des Mittelwertbildners (MB) niederfrequent (fu) unterabtastet und die Abtastwerte dem Fuzzy-Meßgeber (FM) zuführt (Fig.2).

4. Vorrichtung nach Anspruch 3, wobei der zweite Abtaster (AB2) das Ausgangssignal des Mittelwertbildners (MB) synchron mit den Nulldurchgängen einer die Punktschweißvorrichtung versorgenden Primarspannung (Uv) unterabtastet (Fig.1,2).

5. Vorrichtung nach einem der vorangegangenen Ansprüche, wobei für den Fuzzy-Meßgeber (FM) bei der ersten Eingangsgröße der Amplitude der Elektrodenbeschleunigung (AEB) Zugehorigkeitsfunktionen zumindest für niedrige (l_accel), mittlere (m_accel) und hohe (h_accel) Werte berücksichtigt werden (Fig.5).

6. Vorrichtung nach einem der vorangegangenen Ansprüche, wobei für den Fuzzy-Meßgeber (FM) bei der zweiten Eingangsgröße der relativen Widerstandsänderung (R) Zugehörigkeitsfunktionen zumindest für große positive (b_pos), mittlere positive (m_pos), kleine (s_change), mittlere negative (m_neg) und große negative (b_neg) Werte berücksichtigt werden (Fig.6).

7. Vorrichtung nach Anspruch 6, wobei die Flanken der Zugehorigkeitsfunktionen für kleine Werte (s_change) der relativen Widerstandsänderung (R) und die in deren Bereich liegenden Flanken der Zugehorigkeitsfunktionen für mittlere positive (m_pos) bzw. mittlere negative (m_neg) Werte größere Steigungen aufweisen, als die übrigen Flanken der restlichen Zugehörigkeitsfunktionen (b_neg,m_neg,-m_pos,b_pos) für die zweite Eingangsgröße (R) (Fig.6).

8. Vorrichtung nach einem der vorangegangenen Ansprüche, wobei für den Fuzzy-Meßgeber (FM) bei der Ausgangsgröße Zugehörigkeitsfunktionen zumindest für 0%, 20%, 40%, 60%, 80% und 100% Werte des Istwertes der Spritzerstärke (S) berücksichtigt werden (Fig.7).

9. Vorrichtung nach einem der vorangegangenen Ansprüche, wobei in der Regelbasis (Fig.8) des Fuzzy-Meßgebers (FM) bei den Zugehorigkeitsfunktionen für sehr niedrige Werte (0%) der Ausgangsgröße (S) keine Beziehungen zwischen den Zugehorigkeitsfunktionen für mittlere bzw. große Werte (m_accel,h_accel) der ersten Eingangsgröße (AEB) und den Zugehörigkeitsfunktionen für kleine negative bzw. mittlere negative Werte (b_neg, m_neg) der zweiten Eingangsgröße (R) vorgesehen sind (Fig.8a;9a).

10. Vorrichtung nach einem der vorangegangenen Ansprüche, wobei in der Regelbasis (Fig.8) des Fuzzy-Meßgebers (FM) bei den Zugehörigkeitsfunktionen für niedrige und mittlere Werte (20%,40%) der Ausgangsgröße (S) nur Beziehungen zwischen den Zugehörigkeitsfunktionen für hohe Werte (h_accel) der ersten Eingangsgröße (AEB) und den Zugehörigkeitsfunktionen für kleine bzw. mittlere Werte (m_neg,s_change,m_pos) der zweiten Eingangsgröße (R) vorgesehen sind (Fig.8b,8c;9b,9c).

11. Vorrichtung nach einem der vorangegangenen Ansprüche, wobei in der Regelbasis (Fig.8) des Fuzzy-Meßgebers (FM) bei den Zugehörigkeitsfunktionen für größere Werte (60%) der Ausgangsgröße (S) keine Beziehungen zwischen den Zugehörigkeitsfunktionen für kleine bzw. mittlere Werte (l_accel,m_accel) der ersten Eingangsgröße (AEB) und den Zugehörigkeitsfunktionen für alle bzw. kleine bzw. positive Werte (s_change,m_neg,m_pos) der zweiten Eingangsgröße (R) vorgesehen sind (Fig.8d;9d).

12. Vorrichtung nach einem der vorangegangenen Ansprüche, wobei in der Regelbasis (Fig.8) des Fuzzy-Meßgebers (FM) bei den Zugehörigkeitsfunktionen für hohe und sehr hohe Werte (80%,100%) der Ausgangsgröße (S) nur Beziehungen zwischen den Zugehörigkeitsfunktionen für hohe bzw. mittlere Werte (h_accel,m_accel) der ersten Eingangsgröße (AEB) und den Zugehörigkeitsfunktionen für große negative bzw. mittlere negative Werte (b_neg,m_neg) der zweiten Eingangsgröße (R) vorgesehen sind (Fig.8e,8f;9e,9f).
